(19) Europäisches Patentamt
European Patent Office
Office européen des brevets

(11) Veröffentlichungsnummer: **0 166 333**
**A2**

(12) # EUROPÄISCHE PATENTANMELDUNG

(21) Anmeldenummer: **85107411.2**

(51) Int. Cl.⁴: **H 01 B 3/12**

(22) Anmeldetag: **15.06.85**

(30) Priorität: **18.06.84 JP 124721/84**

(43) Veröffentlichungstag der Anmeldung: **02.01.86 Patentblatt 86/1**

(84) Benannte Vertragsstaaten: **DE FR GB NL**

(71) Anmelder: **NGK Spark Plug Co. Ltd., No. 14-18, Takatsuji-cho Mizuho-ku, Nagoya-shi Aichiken (JP)**

(72) Erfinder: **Banno, Hisao, No. 14-18, Takatsuji-cho Mizuho-ku, Nagoya-shi Aichi-ken (JP)**
Erfinder: **Takeuchi, Tadasi, No. 14-18, Takatsuji-cho Mizuho-ku, Nagoya-shi Aichi-ken (JP)**
Erfinder: **Mizuno, Fumio, No. 14-18, Takatsuji-cho Mizuho-ku, Nagoya-shi Aichi-ken (JP)**
Erfinder: **Tunooka, Tutomu, No. 14-18, Takatsuji-cho Mizuho-ku, Nagoya-shi Aichi-ken (JP)**

(74) Vertreter: **Walter, Helmut, Aubingerstrasse 81, D-8000 München 60 (DE)**

(54) **Dielektrisches keramikmaterial für den Einsatz im Hochfrequenzbereich.**

(57) Gegenstand der Erfindung ist ein dielektrisches Keramikmaterial zum Einsatz im Hochfrequenzbereich, gekennzeichnet durch vier Materialkomponenten, nämlich $Sr(Ni_{1/3}Nb_{2/3})O_3$, $Ba(Ni_{1/3}Nb_{2/3})O_3$, $SrZrO_3$ und $BaZrO_3$ gemäß der Formel

$(Ba_xSr_{1-x})(Ni_{1/3}Nb_{2/3})_{1-y}Zr_y)O_3$,

worin die Molfraktionen von x und y in folgenden Bereichen liegen

(a) $0 \leqq x \leqq 0.30$ und $0 < y \leqq 1.00$ und
(b) $0.30 < x \leqq 0.60$ und $0.90 \leqq y \leqq 1.00.0$.

ACTORUM AG

0166533

Anmelder: NGK Spark Plug Co., Ltd., No. 14-18, Takatsuji-cho, Mizuho-ku, Nagoya-shi, Aichi-ken, Japan

# Dielektrisches Keramikmaterial für den Einsatz im Hochfrequenzbereich

Die Erfindung bezieht sich auf ein dielektrisches Keramikmaterial für den Einsatz im Hochfrequenzbereich, das im Mikrofrequenzbereich verwendet werden kann und insbesondere bei Frequenzen oberhalb des X-Bandes. Das Material soll eine hohe Dielektrizitätkonstante und ungeladene Q-Werte sowie eine stabile Temperaturcharakteristik in derart hohen Frequenzbereichen haben.

Während der Entwicklung der Kommunikationsnetze in der letzten Zeit wurde der Arbeitsfrequenzbereich ausgeweitet, um auch den Mikrowellenbereich zu umfassen. In Verbindung damit finden dielektrische Keramikmaterialien Anwendung in dielektrischen Resonatoren, Substraten mit integrierten Mikrowellenschaltkreisen und Scheinwiderstandsanpassungen verschiedener Mikrowellenschaltkreise. Insbesondere ergab sich in neuester Zeit eine verstärkte Nachfrage nach dielektrischen FET Mikrowellenoszillatoren.

Unter diesen Umständen besteht seit kurzem ein allgemeiner Trend zu Mikrowellenschaltkreisen geringerer Größe. Die Größe von Mikrowellenschaltkreisen ist abhängig von der Wellenlänge von zu verarbeitenden elektromagnetischen Wellen. Die Wellenlänge der elektromagnetischen Welle, die sich durch einen dreidimensionalen Mikrowellenschaltkreis fortpflanzt, um ein Dielektrikum zu ergeben, ist durch die Beziehung $\lambda_0/\sqrt{\varepsilon}$ bestimmt

14. Juni 1985

0166333

worin $\lambda_o$ die Wellenlänge der Welle im Vakuum und $\varepsilon$ die relative Dielektrizitätskonstante sind. Daraus ergibt sich, daß $\varepsilon$ umso größer ist, je stabiler das Schaltkreiselement geringer Größe ist. Entsprechend besteht eine große Nachfrage nach dielektrischem Keramikmaterial, das geringe Verluste verursacht, stabile Temperaturcharakteristiken und eine hohe Dielektrizitätskonstante hat, um den oben genannten Problemen gewachsen zu sein.

Bekanntes dielektrisches Keramikmaterial ist ein $ZrO_2$ - $SnO_2$ - $TiO_2$ Keramikmaterial, BaO - $TiO_2$ Keramikmaterial, dem zur BaO - $TiO_2$ Keramik andere Elemente oder Komponenten substituiert sind, indem dielektrische Keramiken oder Glas mit positiven Temperaturkoeffizienten relativer Dielektrizitätskonstanten und $TiO_2$ zugeordnet sind, das einen negativen Temperaturkoeffizienten hat, um den Temperaturkoeffizienten der relativen Dielektrizitätskonstanten einzustellen. Diese dielektrischen Keramikmaterialien haben jedoch ihre verschiedenen eigenen Probleme, indem einige von ihnen unzureichende relative Dielektrizitätskonstanten und andere unzureichende ungeladene Q-Werte haben oder nicht in der Lage sind, die gewünschten Temperaturkoeffizienten zu liefern.

Aufgabe der vorliegenden Erfindung ist es, ein dielektrisches Keramikmaterial für hohe Frequenzbereiche zu schaffen, das frei von den obengenannten Problemen ist und eine hohe Dielektrizitätskonstante hat, geringe Verluste und eine stabile Temperautrkonstante, sodaß es zufriedenstellend im Mikrowellenbereich arbeiten kann.

Gemäß der vorliegenden Erfindung wird ein dielektrisches Keramikmaterial für die Anwendung im Bereich hoher Frequenzen vorgeschlagen, das vier

0166333

Bestandteile aufweist und zwar als Gemisch die vier folgenden Bestandteile $Sr(Ni_{1/3}Nb_{2/3})O_3$, $Ba(Ni_{1/3}Nb_{2/3})O_3$, $SrZrO_3$ und $BaZrO_3$, wobei diese Bestandteile gemäß folgender Formel vorhanden sind

$$(Ba_xSr_{1-x})(Ni_{1/3}Nb_{2/3})_{1-y}Zr_y)O_3,$$

worin die Molfraktionen von x und y in einem kontinuierlichen Bereich wie folgt vorhanden sind

(a) $0 \leqq x \leqq 0.30$ und $0 < y \leqq 1.00$ und

(b) $0.30 < x \leqq 0.60$ und $0.90 \leqq y \leqq 1.00$

Die vorerwähnten Merkmale sowie deren weitere Merkmale und Eigenschaften der Erfindung ergeben sich aus der folgenden Beschreibung, die auf die Zeichnung Bezug nimmt, in der eine Ausführungsform der Erfindung dargestellt ist. In dieser beigefügten Zeichnung sind die Bereiche x und y eines Stoffgemisches gemäß der vorliegenden Erfindung dargestellt, wobei es sich um eine bevorzugte Lösung handelt.

Die Aufbereitung des Prüflinges erfolgte wie folgt:

Die einzelnen Bestandteile $BaCO_3$, $SrCO_3$, $NiO$, $Nb_2O_5$ und $ZrO_2$ wurden entsprechend der Rezeptur abgemessen und zusammen mit Wasser in eine Kugelmühle eingegeben. Die in der Kugelmühle erzeugte Paste wurde zwei Stunden lang bei $1100^oC$ gebrannt. Das Produkt wurde danach pulverisiert, granuliert und unter Druck geformt. Der Formling wurde zwei

Stunden lang in Luft bei einer Temperatur im Bereich von 1400 bis 1600$^0$C gesintert, danach zur gewollten Kontur geschliffen.

Die Testwerte waren die folgenden

Die in der Tabelle angegebenen Werte wurden für $(Ba_xSr_{1-x})(Ni_{1/3}Nb_{2/3})_{1-y}Zr_y)O_3$ gemessen mit x und y im Bereich von 0 bis 1.00, um die in der Tabelle angegebenen Werte zu erhalten.

Für den Temperaturkoeffizienten bei Resonanzfrequenz $T_f$ wurde die Temperatur im Bereich von +25 bis +85$^0$C eingestellt und aus der Gleichung

$$T_f = 1/2\, T_{\varepsilon} - \alpha$$

ermittelt, worin $T_f$ der Temperaturkoeffizient der relativen Dielektrizitätskonstante und $\alpha$ der Koeffizient der linearen Expansion von keramischem Material sind.

In der Tabelle sind die Werte von nicht unter die Erfindung fallenden Materialzusammensetzungen mit "*" gekennzeichnet.

N 86 EP 104
14. Juni 1985

Tabelle

| Prüfling Nummer | Zusammensetzung | | Relative Dielektrizitäts-Konstante ε bis 8GHZ | Temperaturkoeffizient bei Resonanzfrequenz $\tau_f$ (ppm/°C) | ungeladen Q |
|---|---|---|---|---|---|
| | x | y | | | |
| 1 | 0 | 0.02 | 31.3 | -4.2 | 7000 |
| 2 | 0 | 0.20 | 31.4 | -2.2 | 6500 |
| 3 | 0 | 0.40 | 31.5 | -0.8 | 8100 |
| 4 | 0 | 0.60 | 31.5 | -1.5 | 7000 |
| 5 | 0 | 0.80 | 30.2 | -1.2 | 6800 |
| 6 | 0 | 0.95 | 30.0 | -0.5 | 5800 |
| 7 | 0 | 1.00 | 29.4 | -4.2 | 4200 |
| 8 | 0.05 | 1.00 | 30.0 | 1.8 | 4500 |
| 9 | 0.20 | 0.02 | 31.6 | 9.6 | 6000 |
| 10 | 0.20 | 0.20 | 32.7 | 5.8 | 4500 |
| 11 | 0.20 | 0.40 | 33.4 | 4.8 | 4800 |
| 12 | 0.20 | 0.60 | 34.4 | 4.8 | 4800 |
| 13 | 0.20 | 0.80 | 32.5 | 7.2 | 8000 |
| 14 | 0.20 | 1.00 | 30.5 | -3.2 | 7200 |
| 15 | 0.30 | 0.02 | 31.3 | 9.6 | 4000 |
| 16 | 0.30 | 0.20 | 31.6 | 9.8 | 6000 |
| 17 | 0.30 | 0.40 | 32.5 | 4.2 | 5200 |
| 18 | 0.30 | 0.60 | 33.1 | 3.3 | 9200 |
| 19 | 0.30 | 0.80 | 32.5 | 3.5 | 5300 |
| 20 | 0.30 | 1.00 | 32.0 | -1.2 | 4000 |
| 21 | 0.50 | 1.00 | 32.0 | -1.2 | 7000 |
| 22 | 0.60 | 1.00 | 29.2 | 0 | 7200 |
| 23 | 0.60 | 0.90 | 30.9 | -1.3 | 6000 |
| 24 | 0.50 | 0.90 | 32.5 | -2.1 | 7300 |
| 25 | 0.30 | 0.90 | 32.2 | 3.0 | 6000 |
| *26 | 0.31 | 0.02 | 31.4 | 10.9 | 3100 |
| *27 | 0.31 | 0.02 | 31.5 | 11.2 | 4800 |
| *28 | 0.31 | 0.40 | 33.2 | 21.9 | 6200 |
| *29 | 0.31 | 0.60 | 32.9 | 42.8 | 8000 |
| *30 | 0.31 | 0.80 | 31.8 | 50.5 | 6900 |
| *31 | 0.31 | 0.90 | 31.5 | 51.5 | 7200 |
| *32 | 0.40 | 0.89 | 31.4 | 50.2 | 8100 |
| *33 | 0.50 | 0.89 | 31.9 | 41.5 | 5900 |
| *34 | 0.60 | 0.89 | 31.8 | 20.3 | 7200 |
| *35 | 0.61 | 0.90 | 30.7 | 11.5 | 8100 |
| *36 | 0.61 | 1.00 | 29.5 | 19.8 | 7200 |

Die Ergebnisse der Versuche sind folgende

Gemäß der vorstehenden Tabelle liegt der Temperaturkoeffizient bei Resonanzfrequenz $T_f$ innerhalb 0+10 ppm/$^{o}$C mit x und y in den in der Zeichnung wiedergegebenen Werten, d.h.

$$\text{(a)}\quad 0 \leqq x \leqq 0.30 \text{ und } 0 < y \leqq 1.00$$

$$\text{(b)}\quad 0.30 < x \leqq 0.60 \text{ und } 0.90 \leqq y \leqq 1.00.$$

Das bedeutet, daß das Keramikmaterial gemäß der vorliegenden Erfindung geringe Temperaturabhängigkeit hat und demzufolge stabil ist. Werte der relativen Dielektrizitätskonstanten $\varepsilon$, die durch Messen in der Nähe von 8 GHz erhalten wurden, lagen alle über 29. Das bedeutet, daß das dielektrische Keramikmaterial für die praktische Anwendung im Mikrofrequenzbereich geeignet ist. Darüberhinaus lag der ungeladene Q-Wert über 4000.

Aus den obigen Ausführungen ergibt sich auch, daß das dielektrische Keramikmaterial gemäß der vorliegenden Erfindung eine geringe Temperaturabhängigkeit hat, wie es sich in den Werten des Resonanzfrequenztemperaturkoeffizienten ergibt. Desweiteren ist seine relative Dielektrizitätskonstante $\varepsilon$ mindestens 29. Darüberhinaus hat sein ungeladenes Q praktisch brauchbare Werte. Das Keramikmaterial gemäß der Erfindung hat einen geringen Temperaturkoeffizienten und eine hohe Dielektrizitätskonstante und Werte des ungeladenen Q für den Mikrofreqzenzbereich, insbesondere für einen Frequenzbereich oberhalb dem X-Band und es kann mit zufriedenstellendem Ergebnis mit der Größenverringerung von Mikrowellenkreisen verglichen werden.

N 86 EP 104

14. Juni 1985

Patentanspruch

Dielektrisches Keramikmaterial zum Einsatz im Hochfrequenzbereich, gekennzeichnet durch vier Materialkomponenten, nämlich $Sr(Ni_{1/3}Nb_{2/3})O_3$, $Ba(Ni_{1/3}Nb_{2/3})O_3$, $SrZrO_3$ und $BaZrO_3$ gemäß der Formel

$$(Ba_xSr_{1-x})\,(Ni_{1/3}Nb_{2/3})_{1-y}Zr_y)\,O_3,$$

worin die Molfraktionen von x und y in folgenden Bereichen liegen

(a) $0 \leqq x \leqq 0.30$ und $0 < y \leqq 1.00$ und

(b) $0.30 < x \leqq 0.60$ und $0.90 \leqq y \leqq 1.00.0.$

N 86 EP 104

14. Juni 1985

0166333

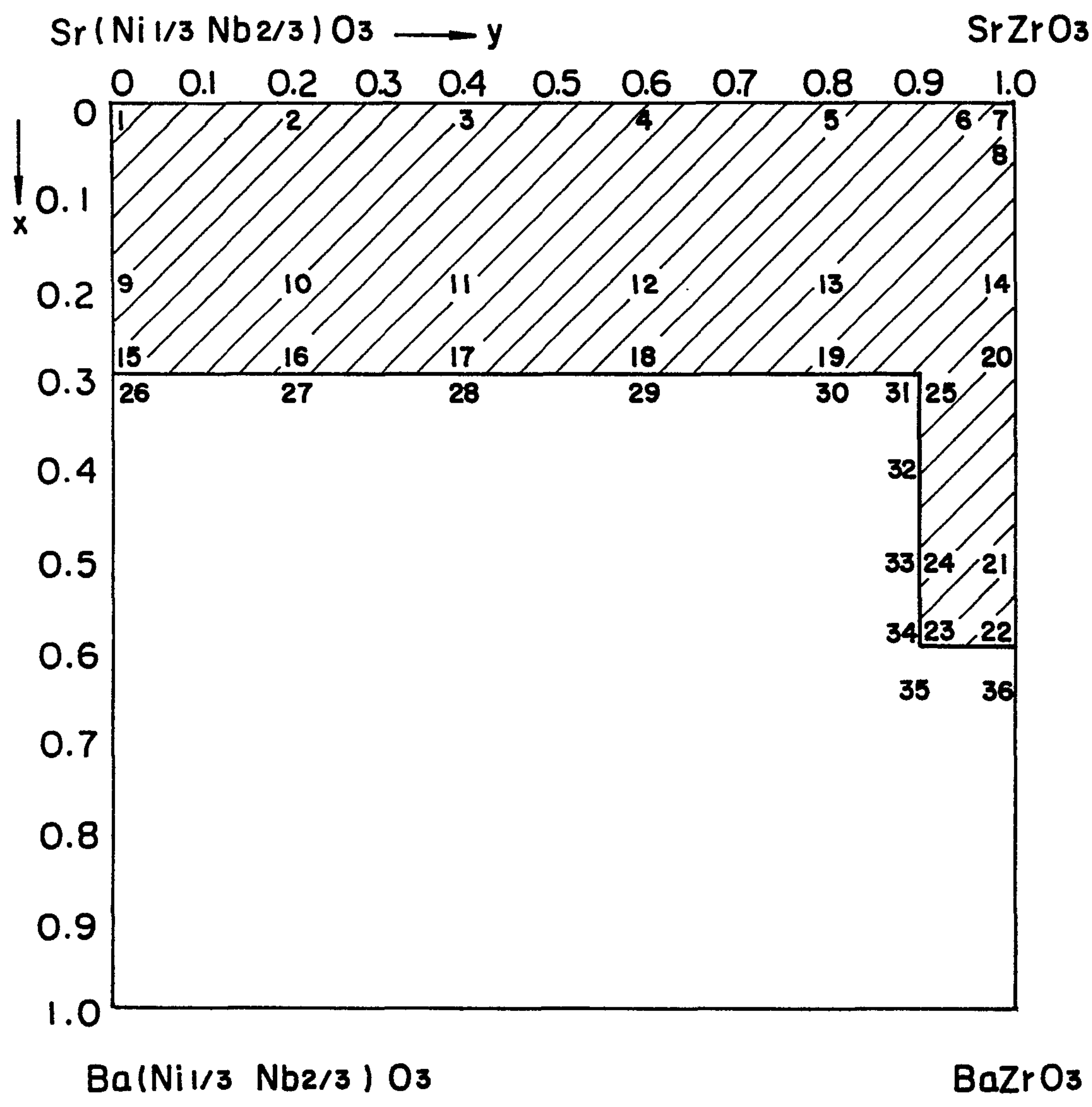


N 85 EO 104
14.Juni 1985